# EUROPEAN PATENT APPLICATION

(11) **EP 4 815 255 A1**
(43) Date of publication of application: **30.09.2026**
(21) Application number: 24894323.5
(22) Date of filing: 30.08.2024
(51) Int. Cl.: H02J 13/00, H02H 3/08, H02H 1/00

(54) **POWER MANAGEMENT SYSTEM FOR PERFORMING OUTPUT CONTROL USING CIRCUIT BREAKER AND CONTROL METHOD OF POWER MANAGEMENT SYSTEM**

(30) Priority: 20.11.2023 KR 20230161266
(71) Applicant: LS Electric Co., Ltd., Anyang-si, Gyeonggi-do 14119 (KR)
(72) Inventor: YUN, Dongjin, Anyang-si, Gyeonggi-do 14118 (KR)
(74) Representative: K&L Gates LLP
(86) International application number: PCT/KR2024/013048
(87) International publication number: WO 2025/110427

(57) **Abstract**

A power management system, according to an embodiment of the present invention, comprises: a power device which supplies power to a power system; a circuit breaker which is connected between the power device and the power system and cuts off the connection between the power device and the power system by means of a semiconductor switch when a preset cutoff condition is met; and a management server which receives, as feedback information, information on a power capacity that the power system can accommodate, and controls the circuit breaker to adjust an on-off duty ratio of the semiconductor switch on the basis of the received feedback information, thereby controlling an amount of power supplied from the power device to the power system per unit time.

## Description

### Technical Field

The present disclosure relates to a power management system including a renewable energy power generation device having a circuit breaker for determining whether there is an abnormal current such as a ground fault, and a management server for controlling the circuit breaker.

### Background Art

Nowadays, renewable energy generation, which converts renewable energy such as sunlight, water, and geothermal heat to produce electricity, is increasing to suppress the greenhouse effect caused by the use of fossil fuels. Furthermore, some of the electric energy generated using fossil fuels can be replaced with electric energy generated from the renewable energy generation, thereby reducing carbon dioxide emissions resulting from the use of fossil fuels.

However, the generation of renewable energy can be greatly affected by the renewable energy environment. That is, the amount of solar or wind power generation can increase significantly depending on the strength of the sunlight or wind, and in this case, the transmission or distribution grid can not accept all of it. Accordingly, output control for limiting the amount of power generation of the renewable energy can be required.

Meanwhile, as part of the output control of a renewable energy power generation device, the operation of some renewable energy power generation devices can be suspended for a predetermined time period. However, when the operation of the renewable energy power generation device is suspended in this way, there is a problem in that power is required for an initial operation of the renewable energy power generation device, and even when the initial operation of the renewable energy power generation device is performed, a relatively long time is required until the output returns to a normal state.

Accordingly, various output control methods are being studied to more efficiently limit the amount of power generation of renewable energy power generation devices.

### Disclosure of Invention

### Technical Problem

The present disclosure aims to solve the above-mentioned problems and other problems, and provides a power management system capable of perform the output control of a renewable energy power generation device using a circuit breaker that detects an abnormal current such as a ground fault, and a control method of the power management system.

### Solution to Problem

In order to achieve the foregoing or other objectives, according to an aspect of the present disclosure, a power management system according to an embodiment of the present disclosure can include a power device that supplies power to a power system; a circuit breaker connected between the power device and the power system to interrupt a connection between the power device and the power system through a semiconductor switch when a preset interruption condition is satisfied, and a management server that receives information on a capacity of power that is acceptable by the power system as feedback information, and controls the circuit breaker to vary an on-off duty rate of the semiconductor switch based on the received feedback information so as to control an amount of power supplied from the power device to the power system per unit time.

In one embodiment, the feedback information can include information on the remaining power capacity that can accept power supplied from the power device according to at least one of a transmission capacity, a distribution capacity, and a storage capacity of the power system, wherein the management server changes the on-off duty rate of the semiconductor switch according to the remaining power capacity included in the feedback information to limit the amount of power supplied from the power device to the power system.

In one embodiment, the circuit breaker can include the semiconductor switch, which is connected to any one of a plurality of electric paths connecting between the power system and the power device to connect or disconnect the power device to or from the power system according to a gate voltage applied to a gate terminal, a gate driver that controls the gate voltage applied to the semiconductor switch, and a circuit breaker control part that controls the gate driver to allow a gate voltage applied to the gate terminal to vary periodically at a predetermined time period according to the on-off duty rate of the semiconductor switch provided from the management server.

In one embodiment, the circuit breaker control part can control the gate driver to allow a gate voltage above a preset threshold voltage to be applied to the gate terminal during a time period in which the semiconductor switch is on during the preset time period according to the on-off duty ratio of the semiconductor switch periodically at a preset time period, and control the gate driver to allow a gate voltage below a preset threshold voltage to be applied to the gate terminal or not to allow the gate voltage to be applied to the gate terminal during a time period in which the semiconductor switch is off during the preset time period according to the on-off duty ratio of the semiconductor switch.

In one embodiment, the circuit breaker control part can determine whether an overcurrent above a reference current is present based on a current flowing into the semiconductor switch from the power device, and control the gate driver to allow the semiconductor switch to disconnect the power device from the power system based on a result of the determination, control the gate driver to allow the power device to be temporarily connected to the power system periodically at a preset time period when the power device is disconnected from the power system, and redetermine whether the overcurrent is present based on a current flowing in from the temporarily connected power device, and control the gate driver to disconnect the power device from the power system again or maintain a state in which the power device is connected to the power system based on a result of the redetermination.

In one embodiment, the circuit breaker control part can temporarily connect the power device to the power system by applying a limited level of gate voltage to the gate terminal of the semiconductor switch, restore, when the overcurrent is not present as a result of the redetermination, the limited level of gate voltage, and maintain a state in which the power device is connected to the power system in a state in which the gate voltage is restored, wherein the limited level of gate voltage is a voltage above a threshold voltage at which a source terminal and a drain terminal can be electrically connected in the semiconductor switch, and is a voltage at a level lower than the level of the restored gate voltage.

In one embodiment, the management server can determine the limited level of gate voltage according to the characteristics of the power device connected to the management server, provide the determined limited level of gate voltage to the circuit breaker, and provide another reference current value according to the limited level of gate voltage to the circuit breaker control part to determine an overcurrent while the power device is temporarily connected to the power system.

In one embodiment, the management server can receive, when the power device is maintained in a state of being connected to the power system as a result of the redetermination, current samples that have sampled the current flowing in from the power device for a predetermined time period from the circuit breaker, compare the received current samples with current characteristics included in at least one abnormal current characteristic profile detected according to the characteristics of the power device, and control the circuit breaker to disconnect the power device from the power system again or maintain a state in which the power device is connected to the power system, wherein the abnormal current characteristic profile is current characteristic information including at least one of a change pattern, an average value, a maximum or minimum value, a difference between the maximum and minimum values, a variance, a standard deviation, and a change amount per unit time of current values or voltage values of current samples related to a specific abnormal current phenomenon.

In one embodiment, one of the plurality of electric paths can be a neutral line connecting between the power device and the power system, wherein the neutral line is connected to the ground, and a source terminal of the semiconductor switch is connected to the neutral line and a drain terminal of the semiconductor switch is connected to the ground.

In one embodiment, at least one smoothing part can be included between the power device and the power system to smooth a current supplied from the power device to the power system according to the on-off duty ratio of the semiconductor switch.

In order to achieve the foregoing or other objectives, according to an aspect of the present disclosure, a control method of a power management system according to an embodiment of the present disclosure can include receiving feedback information including information on acceptable power from a power system that receives power from a power device, determining a duty rate for limiting an amount of power per unit time supplied from the power device to the power system according to the received feedback information, and controlling a circuit breaker to turn on and off a semiconductor switch of the circuit breaker that is connected between the power device and the power system and interrupts a connection between the power device and the power system through the semiconductor switch when a preset interruption condition is satisfied, according to the duty rate.

In one embodiment, the method can further include at least one smoothing part between the power device and the power system to smooth a current supplied to the power system, wherein the method further includes controlling a capacitance of the power storage part according to the duty rate.

In one embodiment, the controlling of the circuit breaker can include controlling a gate driver of the circuit breaker to allow a gate voltage above a preset threshold voltage to be applied to a gate terminal of the semiconductor switch during a time period in which the semiconductor switch is on during the preset time period according to the duty rate periodically at a preset time period, and controlling the gate driver to allow a gate voltage below a preset threshold voltage to be applied to the gate terminal or not to allow the gate voltage to be applied to the gate terminal during a time period in which the semiconductor switch is off during the preset time period according to the duty rate.

In one embodiment, the controlling of the circuit breaker can further include determining whether an overcurrent above a reference current is present based on a current flowing into the semiconductor switch from the power device, controlling the circuit breaker to allow the semiconductor switch to disconnect the power device from the power system according to a result of the determination, controlling the circuit breaker to allow the power device to be temporarily connected to the power system periodically at a preset time period when the power device is disconnected from the power system, redetermining whether the overcurrent is present based on a current flowing in from the temporarily connected power device, and disconnecting the power device from the power system again or maintaining a state in which the power device is connected to the power system based on a result of the redetermination.

In one embodiment, the controlling of the circuit breaker to allow the power device to be temporarily connected to the power system can include temporarily connecting the power device to the power system by applying a limited level of gate voltage to the gate terminal of the semiconductor switch, and the disconnecting of the power device from the power system again or maintaining of a state in which the power device is connected to the power system based on a result of the redetermination can further include restoring, when the overcurrent does is not present as a result of the redetermination, the limited level of gate voltage.

In one embodiment, the limited level of gate voltage can be a voltage above a threshold voltage at which a source terminal and a drain terminal can be electrically connected in the semiconductor switch, and can be a voltage at a level lower than the level of the restored gate voltage.

In one embodiment, the disconnecting of the power device from the power system again or maintaining of a state in which the power device is connected to the power system based on a result of the redetermination can further include receiving, when the overcurrent is not present as a result of the redetermination, current samples that have sampled the current flowing in from the power device for a predetermined time period from the circuit breaker, comparing the received current samples with current characteristics included in at least one abnormal current characteristic profile detected according to the characteristics of the power device, and controlling the circuit breaker to disconnect the power device from the power system again or maintain a state in which the power device is connected to the power system according to a result of the comparison, wherein the abnormal current characteristic profile is current characteristic information including at least one of a change pattern, an average value, a maximum or minimum value, a difference between the maximum and minimum values, a variance, a standard deviation, and a change amount per unit time of current values or voltage values of current samples related to a specific abnormal current phenomenon.

### Advantageous Effects of Invention

According to at least one of embodiments of the present disclosure, the present disclosure can calculate a duty rate corresponding to a target amount of current by using high-speed switching of a circuit breaker and limit the output amount of a renewable energy power generation device connected to the circuit breaker according to the calculated duty rate, thereby performing effective output control without suspending the operation of the renewable energy power generation device. Accordingly, an initial startup of the renewable energy power generation device is not required, thereby having an effect of saving time and energy waste associated with the initial startup.

In addition, according to at least one of the embodiments of the present disclosure, a duty rate of the circuit breaker can be controlled by a management server according to the characteristics of each renewable energy power generation device, thereby controlling a constant amount of electric energy to be output from the each renewable energy power generation device. Accordingly, it has an effect of collectively managing different magnitudes of electric energy output from different power generation devices that are similar to similar products but have different performances.

### Brief Description of Drawings

FIG. 1 is a block diagram showing a structure of a power management system according to an embodiment of the present disclosure.
FIG. 2 is a block diagram showing a structure of a circuit breaker connected to each renewable energy power generation device in a power management system according to an embodiment of the present disclosure.
FIG. 3 is an exemplary diagram showing an example of an output of a renewable energy power generation device that is controlled according to a duty rate of a circuit breaker switch controlled through a management server in a power management system according to an embodiment of the present disclosure.
FIG. 4 is an exemplary diagram showing examples of different duty rates of a circuit breaker switch controlled by a management server in a power management system according to an embodiment of the present disclosure.
FIG. 5 is a block diagram showing a configuration of a management server provided in a power management system according to an embodiment of the present disclosure.
FIG. 6 is a flowchart showing an operation process of a management server that detects an overcurrent while simultaneously controlling an output of renewable energy in a power management system according to an embodiment of the present disclosure.
FIG. 7 is a flowchart showing another operation process of a management server that detects an overcurrent while simultaneously controlling an output of renewable energy in a power management system according to an embodiment of the present disclosure.
FIG. 8 is a flowchart showing an operation process for further determining whether an abnormal current is present when an overcurrent is not detected during the operation process shown in FIG. 6 or FIG. 7.

### Mode for the Invention

It should be noted that technical terms used herein are merely used to describe a specific embodiment, but are not intended to limit the present disclosure. In addition, a singular expression used herein can include a plural expression unless clearly defined otherwise in the context. As used herein, terms such as "comprise" or "include" should not be construed to necessarily include all elements or steps described herein, and should be construed not to include some elements or some steps thereof, or should be construed to further include additional elements or steps.

In addition, in describing technologies disclosed herein, when it is determined that a detailed description of known technologies related thereto can unnecessarily obscure the subject matter disclosed herein, the detailed description will be omitted.

Hereinafter, embodiments disclosed herein will be described in detail with reference to the accompanying drawings.

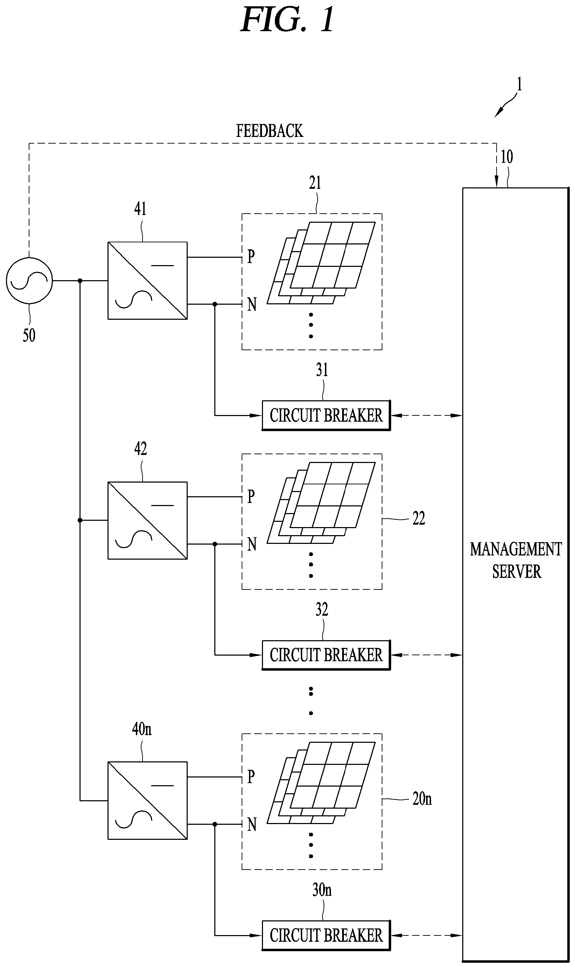

FIG. 1 is a block diagram showing a structure of a power management system 1 according to an embodiment of the present disclosure. Referring to FIG. 1, the power management system 1 according to an embodiment of the present disclosure can include a plurality of renewable energy power generation devices 21, 22, ... 20n (hereinafter referred to as generation devices 20) and a plurality of DC-AC converters 41, 42, ... 40n connected to the plurality of renewable energy power generation devices, respectively. Furthermore, DC type electric energy generated from each power generation device 21, 22, ... 20n can be converted into AC electricity through each DC-AC converter 41, 42, ... 40n (hereinafter referred to as a converter 40) connected thereto and supplied to the power system 50. Here, the power system 50 can be a storage device that stores the generated electric energy, or a system including an energy supply network that supplies electric energy to multiple consumers, such as a grid.

Meanwhile, each renewable energy power generation device 20 can include a circuit breaker 31, 32, ... 30n (hereinafter referred to as a circuit breaker 30) to detect whether a ground fault has occurred and disconnect the power generation device 20 in which a ground fault has occurred from the power management system 1 in order to prevent a safety accident such as a fire or electric shock due to the ground fault. The circuit breaker 30 can disconnect the power generation device 20 in which a safety accident has occurred from the power management system 1 by opening a circuit connecting between the power management system 1 and the power generation device 20 when an abnormal current such as an overcurrent corresponding to a ground fault is detected.

When the power generation device 20 is connected to the power system 50 through the converter 40, the circuit breaker 30 can be connected between the power generation device 20 and the converter 40. In this case, the power generation device 20 can constitute a circuit connected to the converter 40 through a positive (P) phase electric path, which is an electric path through which electric energy generated in the power generation device 20 is input to the power system 50 through the converter 40, and a neutral (N) phase electric path, which is an electric path through which a current is returned. Here, the P line can be referred to as a live line or hot line, and the N line can be referred to as a neutral line.

Furthermore, the circuit breaker 30 can be connected to the management server 10 of the power management system 1 according to an embodiment of the present disclosure. The management server 10 performs management of the power management system 1, and can control an overall function of the power management system 1 for the management.

For example, the management server 10 can receive a detection result of an abnormal current related to a safety accident, such as a ground fault current, through the circuit breaker 30 placed between each power generation device 20 and the converter 40. Furthermore, the at least one circuit breaker 30 can be controlled so as to allow at least one circuit breaker 30 to operate based on the detection result of the abnormal current. Alternatively, when one circuit breaker performs an interruption operation based on the detection result of the abnormal current, the management server 10 can collect information related to the interruption operation performed by the one circuit breaker from the one circuit breaker, and control at least one other circuit breaker to perform the interruption operation.

Here, the circuit breaker 30 can be a solid state circuit breaker (SSCB) using a semiconductor switch that can quickly disconnect a power generation device in which an abnormal current is detected from the power system 50. The semiconductor switch can include at least one power semiconductor, which is capable of conducting a large current and having a high switching frequency, so as to very quickly interrupt the power generation device 20 in which a safety accident such as a ground fault has occurred, thereby preventing damage to the power system 50 due to an abnormal current.

In this case, the solid state circuit breaker can be controlled by the management server 10. For example, the management server 10 can control a control part of the circuit breaker 30 to change a gate voltage applied to a gate terminal of the semiconductor switch through a gate driver of the solid state circuit breaker. Accordingly, each circuit breaker 30 can close a circuit connecting between the converter 40 and the power generation device 20, that is, a connection circuit consisting of the P line and the N line, under the control of the management server 10, to connect the power generation device 20 to the power system 50, or open the connection circuit to disconnect the power generation device 20 from the power system 50.

Meanwhile, as described above, the semiconductor circuit breaker is capable of high-speed switching according to a switching frequency due to the characteristics of semiconductor switches made of power semiconductors. The management server 10 can perform output control to limit an output of electric energy generated from each power generation device 20 using the high-speed switching characteristics of the semiconductor switches.

For example, the management server 10 can receive feedback from the power system 50 according to the renewable energy capacity of the power system 50. The feedback can include information on a capacity according to a transmission capacity, distribution capacity, or storage capacity of the power system. Then, the management server 10 can determine output control for the plurality of power generation devices 20 and a target amount of current to be controlled through the output control based on the feedback received from the power system 50.

Furthermore, the management server 10 can control the semiconductor switch to allow the semiconductor switch to be turned off for a time period corresponding a predetermined ratio periodically at a preset time period according to the target amount of current determined for the output control. Here, a state in which the semiconductor switch is turned off refers to a state in which the semiconductor switch opens the connection circuit, and can refer to a state in which a connection between the converter 40 and the power generation device 20 is interrupted.

In addition, the management server 10 can control the semiconductor switch to allow the semiconductor switch to maintain an on state for the remaining time period excluding a time period in which it is turned off during the preset time period. Here, a state in which the semiconductor switch is turned on refers to a state in which the semiconductor switch closes the connection circuit, and can refer to a state in which the converter 40 and the power generation device 20 are electrically connected to each other.

Therefore, the semiconductor switch can be turned off for a predetermined ratio of the preset time period and turned on for the remaining time period, repeatedly, under the control of the management server 10. That is, a cycle can be formed in which the semiconductor switch is turned on and off based on a predetermined ratio periodically at the preset time period. In this case, a ratio of a time period in which the semiconductor switch is turned on to a time period in which it is turned off is called a duty rate.

The management server 10 can control the circuit breaker 30 to repeat an operation of turning the semiconductor switch on and off according to the duty rate. Then, since the circuit is normally connected for a time period in which the semiconductor switch is turned on, a current generated in the power generation device 20 can be supplied to the power system 50 through the converter 40. However, since the circuit is interrupted when the semiconductor switch is turned off, the supply of a current generated from the power generation device 20 can be stopped. Therefore, an amount of current supplied for the preset time period can be reduced compared to a case where the semiconductor switch is maintained to be continuously turned on.

Meanwhile, when the semiconductor switch is turned off, the circuit can be opened to disconnect the power generation device 20 from the power management system 1, thereby stopping an operation of the power generation device 20. However, when a time period in which the semiconductor switch is turned off is sufficiently short, that is, when a time period corresponding to one period in which the semiconductor switch is turned on and off is sufficiently short, the power generation device 20 can maintain an operating state according to inertia. Furthermore, when one cycle is completed, the semiconductor switch is turned on again according to the next cycle to connect the circuit, thereby allowing the power generation device 20 to be operated normally again.

That is, a connection between the power generation device 20 and the power system 50 can be controlled according to a cycle in which the semiconductor switch is turned on/off repeatedly based on the duty rate, thereby allowing the power generation device 20 to be continuously maintained in an operating state while controlling an amount of output current supplied from the power generation device 20. To this end, a period of the cycle can be a sufficiently small time period, and can be preferably determined according to a time period corresponding to one period of an AC current converted by the converter 40. For example, one period of the AC current can be a time period corresponding to an integer multiple of the cycle. As an example, a time period corresponding to one cycle can be a time period corresponding to one period, half period, or quarter period of the AC current.

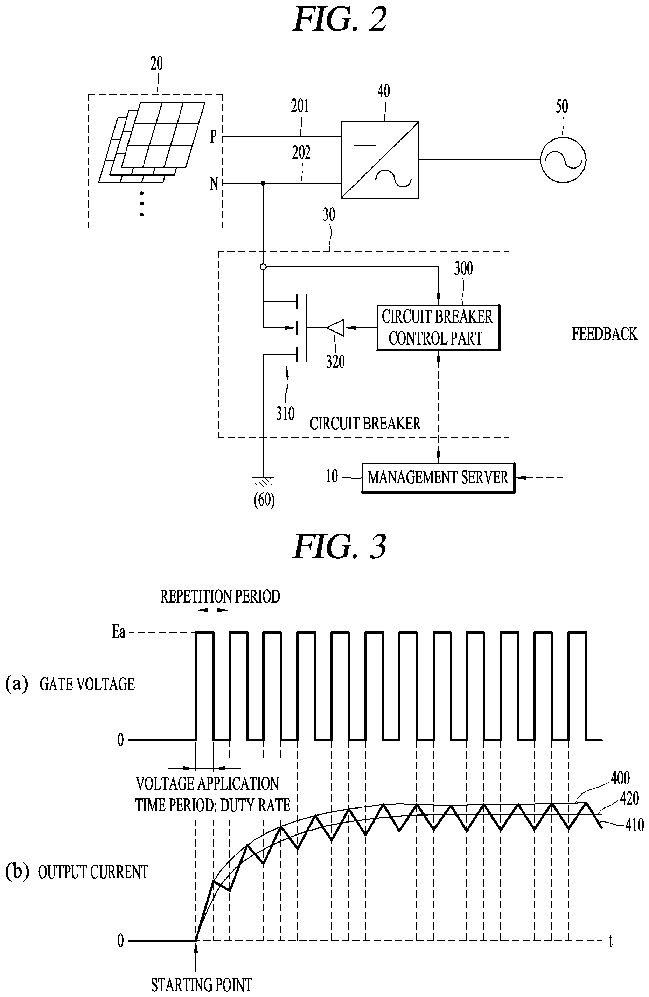

For such output control, the circuit breaker 30 can be configured to include a semiconductor switch made of a power semiconductor. Hereinafter, the configuration of the circuit breaker 30 including the semiconductor switch will be described in more detail with reference to FIG. 2.

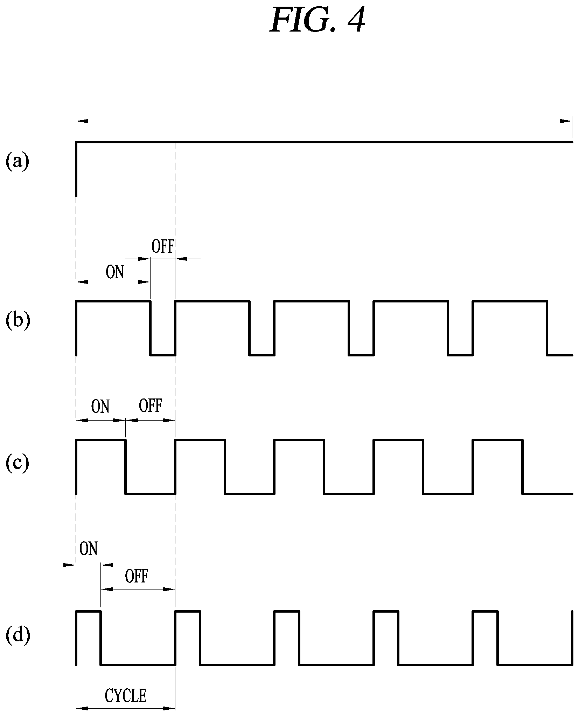

In addition, the management server 10 can control an on-and-off cycle and a duty rate of the semiconductor switch of the circuit breaker 30 according to a target current. For example, the larger the target current, the larger the duty rate, thereby increasing a time period for which the semiconductor switch is turned on during one period, and the smaller the target current, the smaller the duty rate, thereby decreasing a time period for which the semiconductor switch is turned on during one cycle. Here, the target current can be determined according to an amount of power that can be accepted by the power system 50. That is, the management server 10 can increase the target current or, conversely, decrease the target current according to an amount of power that can be accepted by the power system 50, thereby controlling an amount of electricity generated from the plurality of power generation devices 20, that is, an output thereof. The configuration of the management server 10 will be described with reference to FIG. 4. In addition, examples of an output current of the power generation device 20 controlled according to the on-and-off cycle and on-and-off cycles having different duty rates will be described with reference to FIGS. 3 and 4 below.

FIG. 2 is a block diagram showing a structure of the circuit breaker 30 connected to each renewable energy power generation device 20 in the power management system 1 according to an embodiment of the present disclosure. Furthermore, FIG. 3 is an exemplary diagram showing an example of an output of a renewable energy power generation device that is controlled according to a duty rate of a circuit breaker switch controlled through a management server in a power management system according to an embodiment of the present disclosure. Furthermore, FIG. 4 is an exemplary diagram showing examples of different duty rates of a circuit breaker switch controlled by a management server in a power management system according to an embodiment of the present disclosure.

First, referring to FIG. 2, the circuit breaker 30 provided in the power management system 1 according to an embodiment of the present disclosure can be connected to an N line, which is a neutral line, of an electric path constituting a circuit connecting between the power generation device 20 and the power system 50. In this case, among the terminals of the semiconductor switch 310, the source terminal can be connected to the N line, and the drain terminal of the semiconductor switch 310 can be connected to the ground 60.

As the drain terminal of the semiconductor switch 310 is grounded in this way, the neutral line, that is, the N line, can become a ground line connected to the ground 60. Therefore, a return current flowing through the neutral line can flow to the ground 60 via the semiconductor switch 310, and thus a voltage difference between the N line and the P line can be maintained.

Therefore, when a ground fault occurs in the power generation device 20, an abnormal current such as a ground fault current, leakage current, or short-circuit current generated by the ground fault can be grounded via the semiconductor switch 310. That is, when a ground fault occurs, the ground fault current, leakage current, or short-circuit current is added, and thus a magnitude of current flowing into the semiconductor switch 310 can increase. Therefore, whether the ground fault current, leakage current, or short-circuit current occurs based on the magnitude of the current flowing into the semiconductor switch 310.

Meanwhile, the semiconductor switch 310 can be formed to include a source terminal and a drain terminal, and a gate terminal that electrically connects between the source terminal and the drain terminal. Here, the semiconductor switch 310 is formed so as to electrically connect between the source terminal and the drain terminal when a voltage applied to the gate terminal is above a preset threshold voltage, and the semiconductor switch 310 can use a voltage applied to the gate terminal, that is, a gate voltage, to disconnect the power generation device 20 in which a ground fault current has occurred from the power system 50.

To this end, the circuit breaker 30 provided in the power management system 1 according to an embodiment of the present disclosure can include a gate driver 320 that applies the gate voltage to the gate terminal. Furthermore, the gate driver 320 can include a circuit breaker control part 300 that controls a gate voltage applied to the gate terminal.

The circuit breaker control part 300 can control a voltage applied to the gate terminal (hereinafter referred to as a gate voltage) by controlling the gate driver 320. By controlling the gate voltage, the source terminal and the drain terminal of the semiconductor switch 310 can be electrically connected or disconnected.

In more detail, the circuit breaker control part 300 can control the gate driver 320 so as to allow a gate voltage above a preset threshold voltage to be applied to the gate terminal of the semiconductor switch 310. Then, the source terminal and the drain terminal are electrically connected so as to allow a current to flow. When the source terminal and the drain terminal are electrically connected to each other in this way, the circuit breaker control part 300 can control a maximum amount of current that can be conducted between the source terminal and the drain terminal by controlling the magnitude of the gate voltage. On the other hand, the circuit breaker control part 300 can control the gate driver 320 so as to allow a gate voltage below a preset threshold voltage to be applied to the gate terminal of the semiconductor switch 310. Then, the source terminal and the drain terminal can be electrically disconnected by opening the connection between them.

In this case, the on/off switching of the semiconductor switch controlled according to the duty rate can be switched from a state in which a gate voltage applied to the gate terminal is above a threshold voltage to a state in which the gate voltage is applied below the threshold voltage. That is, the circuit breaker control part 300 can control the gate driver 320 so as to allow a voltage above a preset threshold voltage to be applied during a time period in which the semiconductor switch 310 is turned on, and can control the gate driver 320 so as to allow a voltage below the preset threshold voltage to be applied during a time period in which the semiconductor switch 310 is turned off during a time period corresponding to one cycle according to a duty rate provided from the management server 10.

Here, a configuration for controlling the gate driver so as to allow a gate voltage below the threshold voltage of the semiconductor switch to be applied to the gate terminal can include a configuration for controlling the gate driver so as to allow the gate voltage not to be applied to the gate terminal.

Meanwhile, the circuit breaker control part 300 can detect a magnitude of a return current flowing to the ground via the semiconductor switch 310, and determine whether the detected magnitude is above a preset current. Furthermore, when the detected magnitude of current is below the preset current, the gate driver 320 can be controlled so as to allow the source terminal and the drain terminal to be normally conducted. On the other hand, when the magnitude of the return current flowing to the ground via the semiconductor switch 310 is above the preset current, the circuit breaker control part 300 can determine that an abnormal current such as a ground fault or short circuit has occurred, and control the gate driver 320 to disconnect a connection between the source terminal and the drain terminal.

In this case, the circuit breaker control part 300 can electrically disconnect the connection between the source terminal and the drain terminal by controlling the gate driver 320 so as to allow a gate voltage below a preset threshold voltage to be applied to the gate terminal. Then, a connection between the neutral line and the ground is interrupted, and the power generation device 20 can be disconnected from the power system 50 without forming a voltage difference between the N line and the P line. Furthermore, when the power generation device 20 is disconnected from the power system 50, the circuit breaker control part 300 can notify the management server 10 that the power generation device 20 has been disconnected from the power system 50.

Meanwhile, when the connection between the source terminal and the drain terminal of the semiconductor switch 310 is interrupted based on a result of detecting a current flowing through the ground line, the circuit breaker control part 300 can control the gate driver 320 so as to allow a voltage above the threshold voltage to be applied periodically at a preset time period. In this case, the source terminal and the drain terminal can be conducted again, and a current flowing in the neutral line can flow to the ground again via the semiconductor switch 310.

When the source terminal and the drain terminal are connected to each other in this way, the circuit breaker control part 300 can detect a current flowing to the ground line again. Furthermore, depending on whether the current flowing to the ground line as a result of the detection is above the preset current, whether the power generation device 20 is still in an abnormal state such as a ground fault or short circuit can be detected again.

Meanwhile, the connection between the source terminal and the drain terminal for the re-detection can be a temporary connection to determine whether the power generation device 20 is in a ground fault state. Furthermore, the temporary connection can typically use a current smaller than the current flowing to the ground via the semiconductor switch 310. For this temporary connection, the circuit breaker control part 300 can limit an amount of current flowing through the source terminal and the drain terminal by applying a voltage that is lower than a voltage applied to a gate terminal to the gate terminal in a normal case, that is, while the current flowing to the ground via the semiconductor switch 310 is below the preset current.

In this way, the circuit breaker control part 300 according to an embodiment of the present disclosure can minimize a magnitude of current conducted to the semiconductor switch 310 for ground fault detection by limiting the gate voltage level to limit the magnitude of the current flowing into and out of the semiconductor switch 310 when the source terminal and the drain terminal are temporarily connected to each other, thereby preventing a safety accident and damage to an inside of the circuit breaker 30.

Meanwhile, when it is determined whether an abnormal current has occurred in the temporary connection state, the circuit breaker control part 300 can notify the management server 10 of the determined occurrence of an abnormal current.

Meanwhile, the management server 10 can manage the on/off of the circuit breaker 30 connected to at least one power generation device 20 depending on whether an abnormal current has occurred, received from the circuit breaker control part 300. As an example, when an abnormal current is detected in a specific power generation device connected to a specific circuit breaker, the management server 10 can further control at least one other circuit breaker so as to allow at least one other power generation device connected to the specific power generation device to be also interrupted.

In addition, the management server 10 can control the circuit breaker connected to the power generation device to control an output of electric energy generated from the power generation device. For example, the management server 10 can normally maintain a state in which the semiconductor switch 310 maintains an on state throughout a preset time period (a state in which the duty rate is 100%).

However, when the capacity of the power system 50 received through feedback is in a state where output control of the power generation device 20 is required, for example, when the remaining capacity of the power system 50 is below a predetermined level, the management server 10 can determine a target amount of current that is less than an amount of current output from the power generation device 20 in the normal case based on the remaining capacity, and change a duty rate of the semiconductor switch 310 according to the determined target amount of current.

As an example, the management server 10 can control the duty rate to apply a gate voltage below a threshold voltage to the gate terminal for a time period corresponding to a predetermined ratio of a preset one period, or not to apply a gate voltage to the gate terminal. (a) of FIG. 3 shows an example of a case in which a gate voltage is not applied to the gate terminal for a time period corresponding to a predetermined ratio of the one period.

As shown in (a) of FIG. 3, when a gate voltage above a threshold voltage is applied during a remaining time period (first time period) excluding the predetermined ratio during one repeated period, and a gate voltage is not applied during a time period (second time period) corresponding to the predetermined ratio, the semiconductor switch 310 can have a cycle in which an on state is maintained during the first time period and an off state is formed during the second time period. In this case, as shown in (b) of FIG. 3, a phenomenon occurs in which electricity is supplied from the power generation device 20 during the first time period and then the electricity supply is stopped during the second time period, and accordingly, an amount of current can be rapidly reduced during the second time period.

Furthermore, as the next cycle begins, the semiconductor switch 310 is turned on again and the current supply is resumed, and thus the amount of current can increase again. That is, since the current supply is reduced for a time period corresponding to a predetermined ratio according to a cycle in which the semiconductor switch is turned on and off based on a duty rate, an amount of current supplied from the power generation device 20, that is, an output current 420 having an average value smaller than that of the output current 400 when the output control is not performed (when the semiconductor switch 310 is always on, i.e., when the duty rate is 100%) can be output according to the duty rate control.

Meanwhile, when the output current of the power generation device 20 is controlled according to the duty rate control in this way, a sawtooth-shaped output current waveform 410 can be formed as shown in (b) of FIG. 3. Accordingly, the power management system 1 according to an embodiment of the present disclosure can further include a process for smoothing the sawtooth-shaped output current waveform.

For example, in order to smooth the sawtooth-shaped output current waveform, the power management system 1 according to an embodiment of the present disclosure can further include a rectifier circuit including at least one power storage part such as a condenser (or capacitor) (not shown) of a preset capacity between the converter 40 (or power system 50) and the power generation device 20.

Here, the power storage part, which is a variable condenser capable of changing the capacitance, can be formed so as to allow the capacitance to be changed according to the management server 10. Accordingly, the management server 10 can more effectively smooth the sawtooth-shaped output current waveform by varying the capacitance of the variable condenser included in the smoothing part according to the duty rate.

Meanwhile, the management server 10 can control a duty rate of the semiconductor switch 310 in various ways based on feedback received from the power system 50. FIG. 4 shows example of on/off cycles of the semiconductor switches 310 having different duty rates.

First, (a) of FIG. 4 shows an example in which the duty rate is 100%, that is, the semiconductor switch 310 maintains an on state for the entire period. For example, the management server 10 can control the circuit breaker control part 300 to apply a gate voltage above a threshold voltage throughout the entire period, thereby allowing the semiconductor switch 310 to always maintain an on state as shown in (a) of FIG. 4. (a) of FIG. 4 can be a semiconductor switch on-off cycle in the case where the management server 10 does not perform output control.

Meanwhile, (b) of FIG. 4 shows an example when the duty rate is 75%. For example, the management server 10 can determine an amount of output current based on feedback provided from the power system 50, and change the duty rate according to the determined amount of output current (target amount of current). As an example, when the determined target amount of current corresponds to 75% of the output current of the power generation device 20, the management server 10 can control the duty rate to 75%.

Then, the management server 10 can control the circuit breaker control part 300 to apply a gate voltage above the threshold voltage for a time period corresponding 75% of one period, and control the circuit breaker control part 300 to apply a gate voltage below the threshold voltage or not to apply the gate voltage for a time period corresponding to the remaining 25% thereof. Therefore, since a time period for which the power generation device 20 supplies a current per unit time is reduced by 25%, an amount of current supplied from the power generation device 20, that is, an output current, can also be reduced by 25%.

Meanwhile, the management server 10 can determine an amount of output current differently when the feedback provided from the power system 50 changes. For example, when the determined amount of output current, that is, the target amount of current, is 50% or 25%, the duty rate can be controlled as shown in (c) or (d) of FIG. 4. Then, since a time period for which the power generation device 20 supplies a current per unit time is reduced by 50% or 75%, an amount of current supplied from the power generation device 20, that is, an output current, can also be reduced by 50% or 75%.

Meanwhile, when the management server 10 controls an output of the power generation device 20 by controlling a duty rate, when a time period for which the power generation device 20 is disconnected from the circuit according to the duty rate exceeds a predetermined time period, the operation of the power generation device 20 can be completely suspended. Accordingly, the management server 10 can set a minimum duty rate according to a time period during which an inertial operation is enabled even when the power generation device 20 is interrupted, and can also limit output control so as not to be performed below the minimum duty rate.

When output control is further required even though the output control is performed below the minimum duty rate, the management server 10 can operate circuit breakers connected to some of the power generation devices to temporarily disconnect the some of the power generation devices from the power management system 1. In this case, as electricity supply from some of the interrupted power generation devices is stopped, an amount of current supplied to the power system 50 can be reduced. In this case, the management server 10 can control an output of the power generation device according to a remaining capacity of the power system while readjusting a duty rate for semiconductor switches of circuit breakers connected to some of the remaining power generation devices. That is, the management server 10 can perform the output control by controlling not only a duty rate but also circuit breakers connected to some of the power generation devices to temporarily disconnect the some of the power generation devices from the power management system 1.

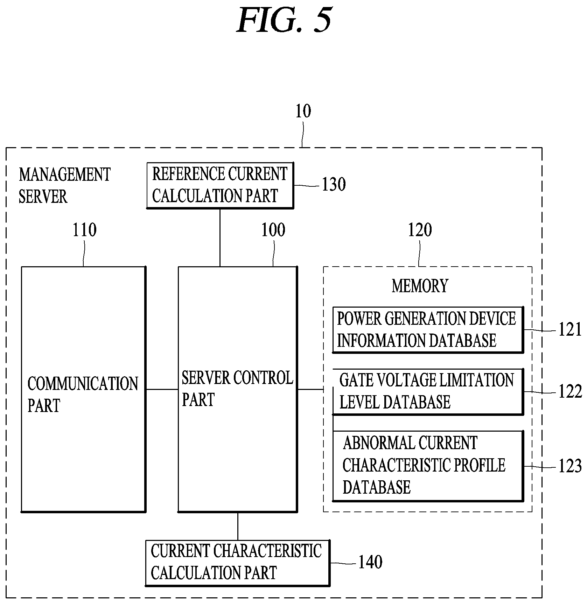

Meanwhile, FIG. 5 is a block diagram showing a configuration of the management server 10 provided in the power management system 1 according to an embodiment of the present disclosure.

Referring to FIG. 5, the management server 10 of the power management system 1 according to an embodiment of the present disclosure can include a server control part 100, and a communication part 110 and a memory 120 connected to the server control part 100 and controlled by the server control part 100. In addition, the management server 10 can further include a reference current calculation part 130 for determining a reference current to detect an abnormal current by the circuit breaker 30 connected to each power generation device 20, and a current characteristic calculation part 140 for analyzing the characteristics of a current flowing in from the connected power generation device to determine whether an abnormal current is present.

First, the communication part 110 can perform communication connection between each element of the power management system 1 and the management server 10 according to an embodiment of the present disclosure. Furthermore, information items received through communication connected thereto can be provided to the server control part 100, or control signals provided from the server control part 100 can be transmitted to the each element.

For example, the communication part 110 can perform communication connection with the management server 10 and each circuit breaker 30 connected to each power generation device 20. Through communication connection with the circuit breaker 30, the communication part 110 can provide the server control part 100 with information on an operating state of the circuit breaker 30, that is, whether an interruption operation due to an abnormal current has been performed. In addition, the communication part 110 can transmit a control signal provided from the server control part 100, that is, a trip signal for the operation of the circuit breaker 30 or various setting values for driving the circuit breaker 30, to the circuit breaker 30. Then, the control signal and setting values are provided to the control part of the circuit breaker 30, that is, the circuit breaker control part 300, and the circuit breaker control part 300 operates according to the received setting values or control signal, thereby performing an operation according to the control of the management server 10. Here, the control signal or setting value for controlling the circuit breaker 30 can include information on a duty rate of the semiconductor switch 310 included in the circuit breaker 30 for controlling an output of the renewable energy power generation device.

In addition, the communication part 110 can perform communication connection with each power generation device 20 and the management server 10. Through the communication connection, the server control part 100 can collect information on the specifications and characteristics of each power generation device 20 included in the power management system 1. Furthermore, the collected information items can be stored in the memory 120 of the management server 10.

In addition, the communication part 110 can be connected to the converter 40 connected to each power generation device 20 to collect information on the operating state of the converter 40 or transmit a control signal of the server control part 100 for controlling the converter 40. In addition, the communication part 110 can be connected to the power system 50 to receive feedback provided from the power system 50. Here, the feedback can include information on an amount of renewable energy power provided by the power management system 1 according to an embodiment of the present disclosure and information on a capacity of renewable energy (or remaining capacity) according to a transmission capacity, distribution capacity, or storage capacity of the power system 50.

Meanwhile, the memory 120 can store data and instructions that support a function of the server control part 100. Furthermore, at least one application program or application for a function performed on the management server 10 can be stored.

As data stored in the memory 120, information on each power generation device 20 of the power management system 1 according to an embodiment of the present disclosure managed and controlled by the management server 10 can be stored. Information items on each of the power generation devices 20 can be stored in the form of a database (DB) (power generation device information database 121). The power generation device information database 121 can include specifications and characteristics of each power generation device 20, for example, power information generated by each power generation device 20. Here, the power information can include current or voltage information of electric energy generated by each power generation device 20.

Furthermore, the server control part 100 can control an overall operation of the management server 10. The server control part 100 can control at least one circuit breaker 30 to perform an interruption operation based on a current value detected from each circuit breaker 30. Alternatively, the server control part 100 can provide a current reference value as a setting value for each circuit breaker 30 to perform an interruption operation, thereby controlling the interruption operation performed by each circuit breaker 30. Here, the interruption operation can refer to that the power generation device 20 connected to the circuit breaker 30 is disconnected from the power management system 1 by turning off the semiconductor switch 310.

In addition, when there is a circuit breaker that has performed an interruption operation due to the detection of an abnormal current, the power generation device 20 connected to the circuit breaker can be detected, thereby detecting the power generation device related to the abnormal current. Furthermore, information related to the detected power generation device, that is, the power generation device related to the abnormal current, can be displayed through a display part (not shown) connected to the management server 10 or provided to a preset terminal through the communication part 110.

Meanwhile, when an interruption operation is performed in this manner, the server control part 100 can control the circuit breaker 30 that has performed the interruption operation to reconnect the interrupted power generation device 20 to the power management system 1 by turning on the semiconductor switch 310 of the circuit breaker 30 in which the interruption operation has been performed after a predetermined time period has elapsed. Then, a current from the power generation device 20 can flow back into the circuit breaker 30, and accordingly, the circuit breaker 30 can detect whether the current flowing back is an abnormal current such as an overcurrent. Furthermore, based on the detection result, the power generation device 20 can be disconnected from the power management system 1 again (the semiconductor switch 310 is turned off again) (when an abnormal current is detected) or the power generation device 20 can be maintained in a state of being connected to the power management system 1 (the semiconductor switch 310 is turned on) (when an abnormal current is not detected).

Through this process, the server control part 100 determines whether the power generation device 20 related to the abnormal current has been restored to a normal operating state periodically at a predetermined time period, and when the power generation device 20 has been restored to a normal operating state, the power generation device 20 can be automatically reconnected to the power management system 1.

However, when an overcurrent such as an abnormal current flows in, there is a possibility that an inside of the circuit breaker 30 can be damaged. Accordingly, when the semiconductor switch 310 of the circuit breaker 30 in which the interruption operation has been performed is turned on again, the server control part 100 may apply a limited gate voltage to the gate terminal of the semiconductor switch 310 so as to limit an amount of current flowing in through the semiconductor switch 310.

In this case, the current limited by the limited gate voltage can be proportional to the input current. Meanwhile, an overcurrent such as a short-circuit current or leakage current varies depending on a magnitude of current generated in each power generation device 20. Therefore, the limited gate voltage can be determined differently depending on the specifications or characteristics of each power generation device 20, and the limited gate voltage corresponding to the specifications or characteristics of different power generation devices 20 can be stored in advance in the memory 120. For example, in the memory 120, information items on limited gate voltages corresponding to each power generation device 20 can be stored in a database according to the specifications or characteristics of the power generation device 20.

Hereinafter, the database of the limited gate voltages stored in the memory 120 will be referred to as a gate voltage limitation level database 122. In this case, information on the specifications and characteristics of each power generation device 20 can use information items stored in the power generation device information database 121.

Meanwhile, when a gate voltage level is limited as described above, a current flowing into the semiconductor switch 310 can be limited. In this way, an overcurrent can be detected as not being an overcurrent depending on a limited current magnitude according to the limited gate voltage level. Accordingly, when the gate voltage level is limited as described above, the server control part 100 can recalculate a reference current to detect whether there is an overcurrent according to the limited gate voltage level, and determine whether there is the overcurrent based on the recalculated reference current.

Meanwhile, in order to recalculate the reference current, the management server 10 can include the reference current calculation part 130 separately from the server control part 100 that recalculates the reference current corresponding to the limited gate voltage. In this case, the server control part 100 can control the reference current calculation part 130 to calculate a reference current for determining whether there is an overcurrent according to the limited gate voltage level based on the limited gate voltage level detected from the gate voltage limit level database 122 and the output current of the power generation device detected through the power generation device information database 121.

Meanwhile, as described above, it has been described that the management server 10 of the power management system 1 according to an embodiment of the present disclosure can maintain, when the re-detected current state is determined not to be an overcurrent by turning on the semiconductor switch 310 of the circuit breaker 30 subsequent to performing an interruption operation of the circuit breaker 30, a state in which the semiconductor switch 310 is turned on. However, even when the re-detected current state is determined not to be an overcurrent, if the re-detected current state has the characteristics of a preset abnormal current, the server control part 100 can also control the circuit breaker 30 so as to allow the circuit breaker 30 to perform an interruption operation again even when it is not an overcurrent.

To this end, the server control part 100 can sample current values detected through the semiconductor switch 310 for a preset time period when it is determined that the re-detected current state is not an overcurrent. Furthermore, various current characteristics can be calculated from the sampled current values. For example, the current characteristics can include at least one of an average or maximum value and a minimum value of current values, a difference between the maximum and the minimum values, and a change pattern or change amount of current values per unit time based on the sampled current values.

In this case, the management server 10 can include the current characteristic calculation part 140 separately from the server control part 100, and the server control part 100 can calculate one or more current characteristics from the sampled current samples by controlling the current characteristic calculation part 140.

Furthermore, the server control part 100 can detect whether an abnormal current has occurred based on at least one of the calculated current characteristics. As an example, the server control part 100 can determine whether a current characteristic calculated from current samples sampled for the preset time period matches at least one current characteristic corresponding to a specific abnormal current. Furthermore, when the current characteristic matches, it is determined that an abnormal current phenomenon corresponding to the matching current characteristic has occurred to control the circuit breaker 30 so as to perform an interruption operation.

Here, at least one current characteristic corresponding to a specific abnormal current phenomenon can be referred to as a current characteristic profile corresponding to the specific abnormal current phenomenon. The memory 120 of the management server 10 can include a database of current characteristic profiles for at least one different abnormal current phenomenon, that is, an abnormal current characteristic profile database 123. That is, the memory 120 of the management server 10 according to an embodiment of the present disclosure can include current characteristics corresponding to a plurality of abnormal current phenomena, respectively, in the form of a database.

Meanwhile, the server control part 100 can perform output control on the power supplied from each power generation device 20 according to renewable energy capacity information received from the power system 50 for each power generation device 20 in which an abnormal current such as overcurrent is not detected. For the output control, the server control part 100 can determine the on/off duty rate (hereinafter referred to as a duty rate) of the semiconductor switch 310 of each circuit breaker 30 based on the renewable energy capacity information.

For example, the server control part 100 can determine whether a renewable energy capacity of the power system 50 is sufficient to accept a total amount of power provided by the power management system 1 according to an embodiment of the present disclosure. Furthermore, when the renewable energy capacity is sufficient to accept power currently supplied from each power generation device 20, that is, the power generation devices 20 that are not interrupted, the duty rate can be determined as 100%. Then, since the semiconductor switch 310 of each circuit breaker 30 continues to maintain an on state for a time corresponding to one cycle, that is, a preset period, the power generation device 20 can maintain a state of being connected to the power system 50 throughout the preset period. That is, a maximum amount of electric energy supplied from the power generation device 20 can be supplied to the power system 50.

However, when the renewable energy capacity of the power system 50 is not sufficient to accept the total amount of power supplied from each power generation device 20 in which an abnormal current such as an overcurrent is not detected, the server control part 100 can control the semiconductor switch 310 to maintain an off state for part of the preset period. Therefore, the semiconductor switch 310 can maintain an off state for the part of the preset period and an on state for the remaining time period. Furthermore, this cycle can be repeated. Then, since a connection between the power generation device 20 and the power system 50 is interrupted during the off time period, the electric energy of the power generation device 20 will not be supplied to the power system 50.

For example, when the duty rate is controlled so as to allow the semiconductor switch 310 to be turned off for 10% of the time period during the preset period (duty rate 90%), power will not be supplied from the power generation device 20 for 10% of the time period that is turned off for each cycle through the duty rate control. Therefore, the overall power supplied to the power system 50 can be reduced. That is, the management server 10 of the power management system 1 according to an embodiment of the present disclosure can perform output control for each power generation device 20 by controlling an operation of the circuit breaker 30 that controls a connection between each power generation device 20 and the power system 50.

Meanwhile, for this output control, information on a duty rate for controlling the semiconductor switch 310 of each circuit breaker 30 based on a renewable energy capacity included in the feedback can be stored in the memory 120. The information on a duty rate can be information on a specific duty rate corresponding to a range of a specific renewable energy capacity included in the feedback, or information on a ratio or calculation condition for calculating a duty rate according to the renewable energy capacity included in the feedback. In this case, the duty rate can be lowered as the renewable energy capacity is lowered, and a minimum value of the duty rate can be set to prevent the power generation device 20 from completely suspending the operation.

Meanwhile, in the foregoing description, the configuration of the power management system 1 according to an embodiment of the present disclosure has been described in detail.

Hereinafter, an operation process in which the management server 10 of the power management system 1 according to an embodiment of the present disclosure controls the circuit breaker 30 of each power generation device 20 will be described in more detail based on a plurality of flowcharts.

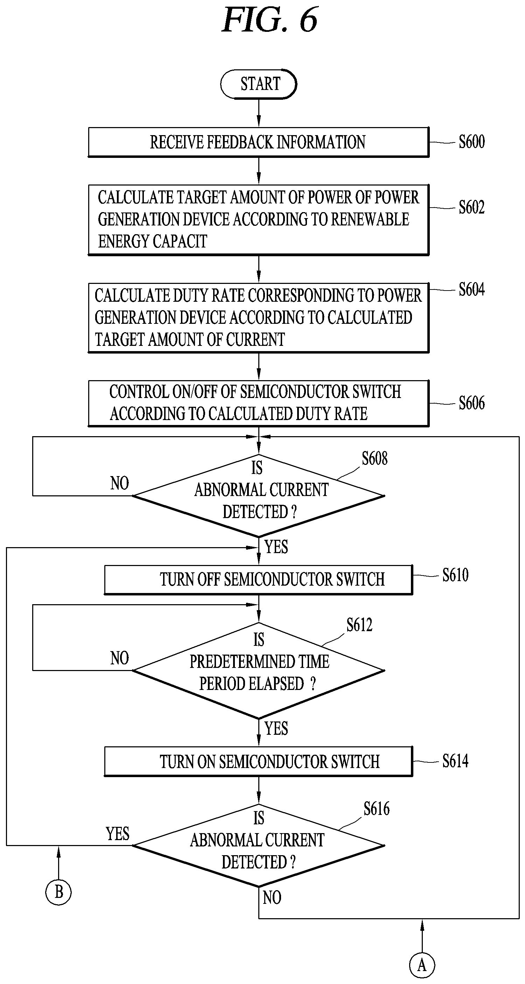

FIG. 6 is a flowchart showing an operation process of the management server 10 that detects whether there is an abnormal current in the power generation device 20 while simultaneously controlling an output of renewable energy for the power generation device 20 in the power management system 1 according to an embodiment of the present disclosure. In the following description, it is assumed that the server control part 100 has received information items on at least one or more power generation devices connected to the management server 10. Here, the information on the power generation devices, which is information on the specifications and characteristics of each power generation device, can include information on the output power that can be produced, that is, an output current and an output voltage.

Referring to FIG. 6, the server control part 100 of the management server 10 according to an embodiment of the present disclosure can receive feedback from the power system 50 (S600). The feedback can be received periodically at a preset time period, and accordingly, the operation process of FIG. 6 can be repeatedly performed periodically at a preset time period.

The feedback can include information on the remaining capacity of renewable energy. Furthermore, the server control part 100 can determine a target amount of power for the power generation device 20 based on the remaining renewable energy capacity of the received feedback (S602). For example, the server control part 100 can divide the received remaining renewable energy capacity according to a ratio of the output power of each power generation device to calculate a target amount of power corresponding to each power generation device.

In this case, when the output power of each power generation device is the same, the server control part 100 can calculate the target amount of power by equally dividing the remaining renewable energy capacity according to a number of power generation devices. Here, the power generation device 20 can refer to a power generation device in a normal operating state in which an abnormal current is detected so as not to be disconnected from the power management system 1.

Furthermore, when the target amount of power is determined, the server control part 100 can calculate a duty rate for the semiconductor switch 310 of the circuit breaker 30 connected to the power generation device based on the determined target amount of power (S604).

Here, when the target amount of power is above an output power of the power generation device 20, the server control part 100 can calculate the duty rate as 100%. Then, since the semiconductor switch 310 of the circuit breaker 30 remains in an on state, the maximum output power of the power generation device 20 can be supplied to the power system 50.

However, when the target amount of power is below the output power of the power generation device 20, the server control part 100 can calculate the duty rate to be below 100%. For example, when the target amount of power is below 87% of the output power of the power generation device 20, the server control part 100 can calculate the duty rate corresponding to the case where the target amount of power is 80% to 90% of the output power, for example, 80%. Alternatively, the server control part 100 can determine the duty rate (e.g., 87%) according to the target amount of power (e.g., 87%) when the target amount of power (e.g., 87%) is below the output power of the power generation device 20.

When a duty rate for the semiconductor switch 310 of the circuit breaker 30 is calculated in the step S604, the server control part 100 can control the circuit breaker 30 so as to allow the semiconductor switch 310 of the circuit breaker 30 to be turned on and off according to the calculated duty rate (S606). Here, turning on the semiconductor switch can refer to a gate voltage above a preset threshold voltage being applied to the gate terminal, and turning off the semiconductor switch can refer to not only a gate voltage applied to the gate terminal being interrupted, but also a gate voltage below the preset threshold voltage being applied.

Then, a time period for which the power generation device 20 supplies power to the power system 50 is controlled according to a duty rate set in the circuit breaker 30, and thus the output control of each power generation device 20 can be performed.

Meanwhile, in a state where output control is performed according to the duty rate, the server control part 100 can detect whether an abnormal current such as an overcurrent is detected in the circuit breaker 30 (S608). Furthermore, when no abnormal current is detected, a state in which power is supplied to the power system 50 according to a current duty rate can be maintained.

However, when an abnormal current is detected as a result of the detection in the step S608, the server control part 100 can turn off the semiconductor switch 310 (S610). To this end, the server control part 100 can control the circuit breaker control part 300 to interrupt a gate voltage applied to a gate terminal of the semiconductor switch 310 or apply a gate voltage below a preset threshold voltage to the gate terminal. Then, while opening between the neutral line of the power generation device 20 and the ground through the semiconductor switch 310, the power generation device 20 can be disconnected from the power management system 1.

In the step S610, when the semiconductor switch is turned off, the server control part 100 can determine whether a preset time period has elapsed (S612). Furthermore, when the preset time has elapsed, the circuit breaker control part 300 can be controlled to turn the semiconductor switch on again (S614). For example, the server control part 100 can control the circuit breaker control part 300 to apply a gate voltage above the threshold voltage to the gate terminal. Then, while the semiconductor switch 310 is turned on again, the power generation device 20 connected to the circuit breaker 30 can be connected to the power management system 1 again. Accordingly, a current supplied from the power generation device 20 can flow back into the circuit breaker 30, and the circuit breaker 30 can determine once again whether the current supplied from the power generation device 20 is an abnormal current such as an overcurrent (S616).

As a result of the determination in the step S616, when the abnormal current is detected from the reconnected power generation device 20, the server control part 100 can proceed to the step S610 again to turn off the semiconductor switch 310 again. Then, the process proceeds to step S612 to determine whether a predetermined time period has elapsed, and depending on a result of the determination, steps subsequent thereto (steps S614 and S616) can be performed again.

On the other hand, as a result of the determination in the step S616, when the abnormal current is not detected from the reconnected power generation device 20, the server control part 100 can proceed to the step S608 again to detect the abnormal current such as the overcurrent while maintaining a state in which the on/off of the semiconductor switch 310 is controlled according to the duty rate calculated in the step S606. Furthermore, depending on a result of detecting the abnormal current, the process subsequent thereto can be performed again. Furthermore, the operation process of the FIG. 6 can be maintained until new feedback is received from the power system 50.

Meanwhile, according to the foregoing description, the duty rate can have a minimum value set in advance. However, when the duty rate calculated in the step S604 is below the preset minimum duty rate, output control can be difficult.

In this case, the server control part 100 can arbitrarily interrupt at least one of a plurality of power generation devices from the power management system 1. In this case, the at least one of the power generation devices 20 can be a normally operating power generation device in which no abnormal current such as an overcurrent is detected. That is, the server control part 100 according to an embodiment of the present disclosure can arbitrarily interrupt at least one normally operating power generation device from the power management system 1 when necessary to prevent a power supply overload of the power system 50.

In this way, when at least one normally operating power generation device is arbitrarily interrupted for output control, the server control part 100 can recalculate a target amount of power based on a number of currently normally operating power generation devices, that is, the remaining power generation devices that are not interrupted, according to the currently received remaining capacity of renewable energy. Furthermore, a duty rate of each power generation device can be calculated again based on the calculated target amount of power.

Meanwhile, when the server control part 100 performs output control using the duty rate as described above in FIG. 6, if there is a power generation device in which an abnormal current such as an overcurrent is detected, that power generation device can be disconnected from the power management system 1. In this case, according to the foregoing description of FIG. 6, it has been described that the process of turning on the semiconductor switch again depending on whether a predetermined time period has elapsed, determining whether an abnormal current is present according to a current flowing therein, and turning off the semiconductor switch again when the abnormal current is determined is repeated.

In this case, the server control part 100 can detect a number of times the repetition process of FIG. 6, that is, the process from step S610 to step S614, is repeated, and, of course, also maintain the power generation device in which an abnormal current continuously occurs in an interruption state according to the detected number of times. For example, when the process from step S610 to step S614 is repeated by a preset number of times, the server control part 100 can maintain an interruption state for that power generation device until a manual connection is made by an administrator or the like to directly set a reconnection.

Then, the server control part 100 can perform the step S602 of FIG. 6 again to calculate the target amount of power for each circuit breaker based on a number of currently operating normally power generation devices, that is, the remaining power generation devices that are not interrupted. Furthermore, operation processes subsequent thereto can be performed again. Accordingly, a target amount of power and a duty rate of each of the remaining power generation devices, excluding the power generation device in which an abnormal current is detected, can be calculated again. Furthermore, according to the recalculated duty rate, the on/off of the semiconductor switch of each circuit breaker connected to each of the remaining power generation devices can be controlled.

Alternatively, when a re-execution condition of the operation process described in FIG. 6 is satisfied, that is, when feedback is received again from the power system 50 and the process of FIG. 6 is performed again, normally operating power generation devices can be detected again. Therefore, a target amount of power can be calculated based on an amount of power produced by the remaining power generation devices excluding the interrupted power generation device, and output control can be performed through a duty rate according to the calculated target amount of power.

Meanwhile, according to the foregoing description, in the power management system 1 according to an embodiment of the present disclosure, when an abnormal current is detected, the semiconductor switch 310 of the circuit breaker 30 can be arbitrarily switched back to an on state by the management server 10 after a predetermined time period has elapsed. Furthermore, a configuration for detecting a current flowing in through the semiconductor switch 310 that has been switched to the on state to determine whether there is an abnormality again has been described.

In this case, since the semiconductor switch 310 can be damaged when an overcurrent flows in when the management server 10 arbitrarily switches to an on state, it has been mentioned that a limited level of gate voltage can be applied to limit an amount of current flowing in through the semiconductor switch 310.

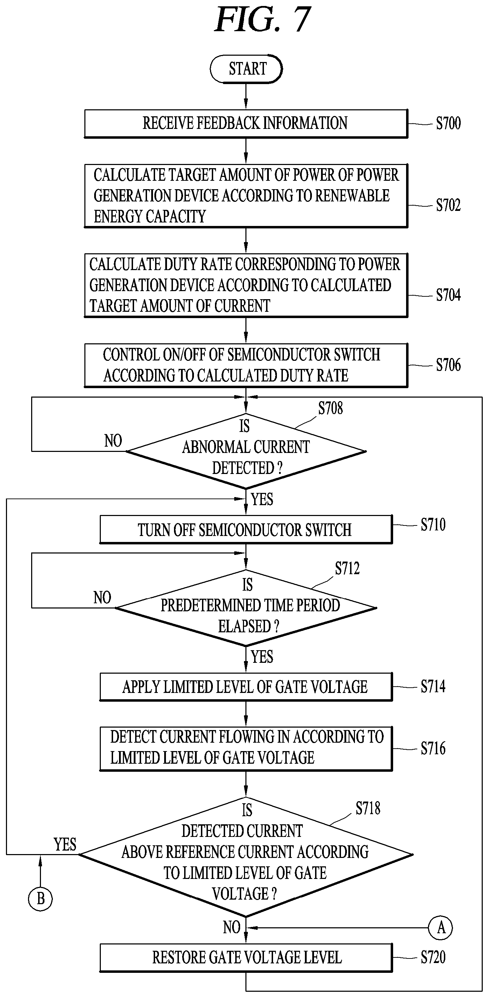

FIG. 7 is a flowchart showing an operation process of the management server 10 that applies the limited level of gate voltage when detecting an overcurrent while simultaneously controlling an output of renewable energy in the power management system 1 according to an embodiment of the present disclosure.

Referring to FIG. 7, the server control part 100 of the management server 10 according to an embodiment of the present disclosure can receive feedback from the power system 50 (S700). Furthermore, the server control part 100 can determine a target amount of power for the power generation device 20 based on the remaining renewable energy capacity of the received feedback (S702).

Furthermore, when the target amount of power is determined, the server control part 100 can calculate a duty rate for the semiconductor switch 310 of the circuit breaker 30 connected to the power generation device based on the determined target amount of power (S704). Furthermore, when a duty rate for the semiconductor switch 310 of the circuit breaker 30 is calculated, the server control part 100 can control the circuit breaker 30 so as to allow the semiconductor switch 310 of the circuit breaker 30 to be turned on and off according to the calculated duty rate (S706). Then, a time period for which the power generation device 20 supplies power to the power system 50 is controlled according to a duty rate set in the circuit breaker 30, and thus the output control of each power generation device 20 can be performed.

Meanwhile, in a state where output control is performed according to the duty rate, the server control part 100 can detect whether an abnormal current such as an overcurrent is detected in the circuit breaker 30 (S708). Furthermore, when no abnormal current is detected, a state in which power is supplied to the power system 50 according to a current duty rate can be maintained.

However, when an abnormal current is detected as a result of the detection in the step S708, the server control part 100 can turn off the semiconductor switch 310 (S710). To this end, the server control part 100 can control the circuit breaker control part 300 to interrupt a gate voltage applied to a gate terminal of the semiconductor switch 310 or apply a gate voltage below a preset threshold voltage to the gate terminal. Then, while opening between the neutral line of the power generation device 20 and the ground through the semiconductor switch 310, the power generation device 20 can be disconnected from the power management system 1.

In the step S710, when the semiconductor switch is turned off, the server control part 100 can determine whether a preset time period has elapsed (S712). Furthermore, when a preset time period has elapsed, the gate driver 320 can be controlled so as to allow a gate voltage above a threshold voltage to be applied to the gate terminal of the semiconductor switch 310 so as to temporarily connect between a source terminal and a drain terminal of the semiconductor switch 310 (S714).

In this case, for a temporary connection between the source terminal and the drain terminal, the server control part 100 can control the circuit breaker control part 300 so as to allow the gate driver 320 to apply a limited level of gate voltage to the gate terminal of the semiconductor switch 310.

Here, the limited level of gate voltage can be a gate voltage at a level lower than a normal level of gate voltage. Here, the normal level of gate voltage refers to a gate voltage applied to the gate terminal of the semiconductor switch 310 when the normally operated power generation device 20 is connected to the power management system 1, and can be a voltage having a magnitude above a threshold voltage.

Therefore, both the limited level of gate voltage and the normal level of gate voltage can have a level above a threshold voltage. However, the limited level of gate voltage can be a voltage having a level lower than the normal level of gate voltage. Therefore, as the gate voltage is limited, a magnitude of current output from a neutral line to the ground can also be limited.

Meanwhile, as a limited level of gate voltage is applied to the gate terminal in the step S714, the source terminal and the drain terminal can be temporarily connected to each other. Therefore, the neutral line and the ground can be temporarily connected to each other, thereby allowing the current in the neutral line to flow to the ground.

Furthermore, the server control part 100 can detect a magnitude of current flowing through the source terminal and the drain terminal according to the limited level of gate voltage, that is, a magnitude of return current (hereinafter, limited return current) according to the limited gate voltage (S716). Furthermore, the magnitude of return current detected at step S716 can be compared with a reference current according to the limited level of gate voltage (S718).

Here, a reference current (hereinafter referred to as a second reference current) according to the limited level of gate voltage can be a current whose magnitude is different from that of a reference current for determining whether an abnormal current is present in the step S708, that is, a reference current (the first reference current) according to a typical level of gate voltage. For example, in the case of a return current flowing in while the gate voltage level is limited, a current flow can be limited by the limited level of gate voltage. Therefore, the second reference current can be a current smaller in magnitude than the first reference current. Here, the limited level of gate voltage can be determined based on the specifications and characteristics of the power generation device 20 connected to the circuit breaker 30, and the second reference current can be calculated by the reference current calculation part 130 based on the characteristics (e.g., a rated output current) of the power generation device 20 connected to the circuit breaker 30 and the limited level of gate voltage (e.g., calculated from a rated output current magnitude based on a ratio between a normal gate voltage level and a limited level of gate voltage level).

Meanwhile, as a result of the comparison in the step S718, when the detected return current is above the second reference current, the server control part 100 can proceed to step S710 again to turn off the semiconductor switch 310. Then, the process can proceed to step S712, and depending on whether a predetermined time period has elapsed, proceed to step S714 of applying a limited level of gate voltage, and perform steps subsequent thereto.

On the other hand, as a result of the comparison in the step S718, when the detected return current is below the second reference current, the server control part 100 can restore the limited level of gate voltage applied in the step S714 to the normal level (S720). Furthermore, the process can perform step S708 of detecting whether there is an abnormal current according to the first reference current again, and perform steps subsequent thereto again according to the detection result of step S708.

Meanwhile, the process of FIG. 7 can also be performed again according to a period in which feedback is received, as described in FIG. 6. In addition, as a result of detecting whether there is an abnormal current according to the second reference current for a preset number of times, when the abnormal current is continuously detected above the preset number of times, the server control part 100 can, of course, control the circuit breaker control part 300 to maintain the semiconductor switch 310 in an off state without re-detecting the return current by applying a limited level of gate voltage. In this case, the server control part 100 can re-detect a number of normally operating power generation devices, and re-calculate a target amount of power and a duty rate according to the target amount of power for each of the normally operating power generation devices based on the detected number. Furthermore, the semiconductor switch of the circuit breaker connected to each of the normally operating power generation devices can be controlled to be turned on and off according to the re-calculated duty rate.

Meanwhile, according to the foregoing description, it has been mentioned that the management server 10 of the power management system 1 according to an embodiment of the present disclosure can further determine whether an abnormal current is detected based on an abnormal current characteristic profile. In this case, the server control part 100 can further determine, when an abnormal current such as an overcurrent is not detected, whether the abnormal current is detected based on the abnormal current characteristic profile in the operation process shown in FIGS. 6 and 7, and disconnect the power generation device 20 from the power management system 1 based on a result of the determination.

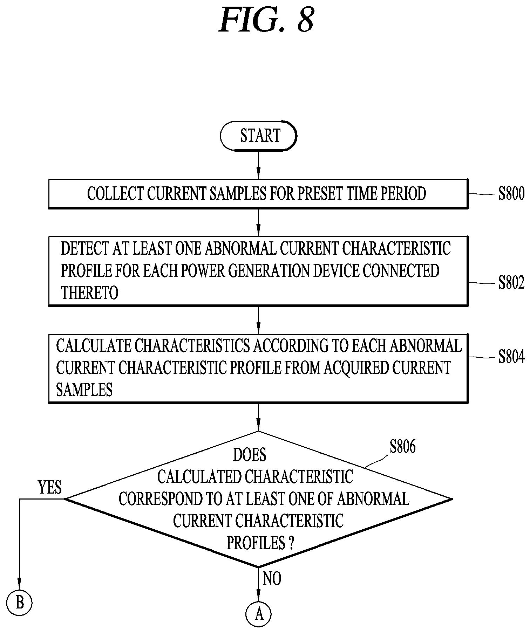

FIG. 8 is a flowchart showing an operation process for further determining whether an abnormal current is present when an overcurrent is not detected during the operation process shown in FIG. 6 or FIG. 7 as described above. The operation process of FIG. 8 below can be an operation process that is further performed when an abnormal current is not detected from the return current detected while the semiconductor switch 310 is arbitrarily turned on during the operation process of FIG. 6, that is, when an abnormal current is not detected in the step S616 of FIG. 6.

Alternatively, during the operation process of FIG. 7, when the return current flowing into the semiconductor switch 310 is below the second reference current while a limited level of gate voltage is applied, it can be an operation process that is further performed prior to proceeding from the step S718 to the step S720 of FIG. 7.

Referring to FIG. 8, when a result of the detection in the step S616 of FIG. 6 and in the step S718 of FIG. S7 indicates that the return current flowing into the semiconductor switch 310 that has been turned on again is below a preset reference current, the server control part 100 can collect a plurality of current samples through the circuit breaker 30 for a preset time period (S800). Furthermore, at least one abnormal current characteristic profile corresponding to each power generation device connected to the circuit breaker 30 can be detected from the abnormal current characteristic profile database 123 (S802).

The abnormal current characteristic profile database 123 can include information on characteristics related to various abnormal current phenomena such as a short circuit, a ground fault, or a leakage current, depending on the characteristics of each power generation device, for example, a magnitude of output current or voltage, or output power. As an example, the abnormal current characteristic profile database 123 can include information on current patterns that occur when a specific abnormal current phenomenon occurs for each power generation device.

In addition, the abnormal current characteristic profile database can include information items on priorities for abnormal current phenomena with a high probability of occurrence according to the characteristics of each power generation device. Therefore, even when the same current characteristics are detected, it can be determined that they correspond to one of the different abnormal current phenomena according to the priorities.

The abnormal current characteristic profile database 123 can include information on a plurality of abnormal current phenomena corresponding to each different type of power generation device. Here, the information on the abnormal current phenomena can be information items on current characteristics corresponding to each abnormal current phenomenon.

Each abnormal current phenomenon can include at least one current characteristic, wherein the current characteristics included in the abnormal current phenomenon can include at least one of a change pattern, an average value, a maximum or minimum value, a difference between the maximum and minimum values, a variance, a standard deviation, and a change per unit time of current values or voltage values.

The current characteristics for the abnormal current phenomena can be called an abnormal current characteristic profile for the abnormal current phenomenon, and can differ depending on the characteristics of each power generation device. That is, each abnormal current characteristic profile refers to a change pattern, an average value, a maximum or minimum value, a difference between the maximum and minimum values, a variance, a standard deviation, and a change per unit time of current values or voltage values corresponding to abnormal current phenomena corresponding to different power generation devices, and therefore, even when it is a current characteristic profile for the same abnormal current phenomenon, it can have different values when the types of power generation devices are different.

In the S802 step, the server control part 100 can detect an abnormal current characteristic profile according to the characteristics of the power generation device connected to the circuit breaker 30 for each circuit breaker 30 from the memory 120. Therefore, depending on the characteristics of each power generation device, at least one of a change pattern, an average value, a maximum or minimum value, a difference between the maximum and minimum values, a variance, a standard deviation, and a change per unit time of different current or voltage values, that is, an abnormal current characteristic profile, can be detected as a current characteristic corresponding to an abnormal current phenomenon.

Then, the server control part 100 can calculate at least one current characteristic according to the abnormal current characteristic profile determined in the step S802 for the current samples collected for a preset time period in the step S800. For example, in the step S802, when a leakage phenomenon is determined according to a priority of an abnormal current phenomenon for the power generation device connected thereto, and as an example of an abnormal current characteristic profile detected according to the leakage phenomenon, a change pattern of a current value and a current change amount per unit time are detected, the server control part 100 can calculate a change pattern and a current change amount per unit time of the determined current value for the current samples calculated in the step S800.

Furthermore, the server control part 100 can determine whether a current characteristic (e.g., a change pattern and a current change amount per unit time of a current value) calculated in the step S804 corresponds to at least one of the abnormal current characteristic profiles corresponding to the abnormal current phenomenon (e.g., a leakage phenomenon) determined in the step S802 (S806). Furthermore, when the current characteristic calculated in the step S804 does not match any one of the abnormal current characteristic profiles, the server control part 100 can determine that the abnormal current phenomenon has not been detected.

Accordingly, in the case of FIG. 6, the process proceeds from step S616 to step S608 to detect whether there is an abnormal current. In addition, in the case of FIG. 7, the process can proceed from step S718 to step S720 to restore the limited gate voltage level to the normal level.

However, when the current characteristic calculated in the step S804 matches any one of the abnormal current characteristic profiles, the server control part 100 can determine that there is a possibility of an abnormal current phenomenon. Accordingly, the server control part 100 can proceed to step S610 in the case of FIG. 6 and step S710 in the case of FIG. 7 to turn off the semiconductor switch 310 again, and perform steps subsequent thereto depending on whether a predetermined time period has elapsed.

Alternatively, when the current characteristic calculated in the step S804 matches any one of the abnormal current characteristic profiles, the server control part 100 can, of course, perform the operation process of FIG. 8 again. Furthermore, as a result of performing the operation process of FIG. 8 again, the process can, of course, proceed to the step S610 of FIG. 6 or the step S710 of FIG. 7 based on whether the current characteristic calculated in the step S804 matches one of the abnormal current characteristic profiles.

In this case, when the current characteristic calculated in the step S804 matches any one of the abnormal current characteristic profiles, the server control part 100 can determine that the abnormal current phenomenon is not detected as described above, and proceed from step S616 to step S608 again in the case of FIG. 6, or proceed from step S718 to step S720 in the case of FIG. 7.

Meanwhile, in the foregoing description of the present disclosure, specific embodiments have been described, but various modifications may be made without departing from the scope of the present disclosure. In particular, in an embodiment of the present disclosure, it has been described that an output of each power generation device is controlled by controlling a duty rate of each circuit breaker in order to control an output provided by the power system 50, but similarly, the present disclosure can, of course, be applied to control a plurality of power generation devices having different outputs so as to allow the output to be the same.

For example, even for the same or similar power generation device, there can, of course, be a difference in output power. In this case, the management server of the power management system according to an embodiment of the present disclosure can control a circuit breaker connected to each power generation device in order to unify the output of each power generation device.

That is, for power generation devices with a higher output, a duty rate of the semiconductor switch of the circuit breaker can be lowered in proportion to the output, and for power generation devices with a lower output, a duty rate thereof can be increased in proportion to the output, thereby, of course, unifying the power output from each power generation device. In this case, since the outputs of respectively power generation devices are all the same, the ease of management can be increased.

In addition, although the foregoing description has used a power generation device that generates renewable energy as an example, the present disclosure is not, of course, limited thereto. That is, the power generation device mentioned in the present disclosure can, of course, be applied to a power generation device that generates electricity in other ways as well as renewable energy.

In addition, according to the present disclosure, the management server controls the output of the power generation device by controlling the circuit breaker that controls a connection between the power management system and the power generation device, and the present disclosure can also, of course, be applied not only to the power generation device, but also to a case where a power device that simply provides power to a power system is connected to the power system. That is, in the present disclosure, the foregoing power generation device can be a power device that provides power to a power system, and in this case, the on/off duty rate of a circuit breaker connected to the power device can be controlled by the server control part of the management server according to an embodiment of the present disclosure, thereby, of course, controlling an output provided from the power device.

The foregoing present disclosure can be implemented as codes readable by a computer on a medium written by the program. The computer-readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and also include a device implemented in the form of a carrier wave (e.g., transmission over the Internet). In addition, the computer can also include the controller of the terminal.

Therefore, the detailed description should not be limitedly construed in all of the aspects, and should be understood to be illustrative. The scope of the present disclosure should be determined by reasonable interpretation of the appended claims, and all changes that come within the equivalent scope of the present disclosure are included in the scope of the present disclosure.

## Claims

1. A power management system comprising:
a power device that supplies power to a power system;
a circuit breaker connected between the power device and the power system to interrupt a connection between the power device and the power system through a semiconductor switch when a preset interruption condition is satisfied; and
a management server that receives information on a capacity of power that is acceptable by the power system as feedback information, and controls the circuit breaker to vary an on-off duty rate of the semiconductor switch based on the received feedback information so as to control an amount of power supplied from the power device to the power system per unit time.

2. The system of claim 1, wherein the feedback information comprises:
information on the remaining power capacity that can accept power supplied from the power device according to at least one of a transmission capacity, a distribution capacity, and a storage capacity of the power system, and
wherein the management server changes the on-off duty rate of the semiconductor switch according to the remaining power capacity included in the feedback information to limit the amount of power supplied from the power device to the power system.

3. The system of claim 1, wherein the circuit breaker comprises:
the semiconductor switch, which is connected to any one of a plurality of electric paths connecting between the power system and the power device to connect or disconnect the power device to or from the power system according to a gate voltage applied to a gate terminal;
a gate driver that controls the gate voltage applied to the semiconductor switch; and
a circuit breaker control part that controls the gate driver to allow a gate voltage applied to the gate terminal to vary periodically at a predetermined time period according to the on-off duty rate of the semiconductor switch provided from the management server.

4. The system of claim 3, wherein the circuit breaker control part controls the gate driver to allow a gate voltage above a preset threshold voltage to be applied to the gate terminal during a time period in which the semiconductor switch is on during the preset time period according to the on-off duty rate of the semiconductor switch periodically at a preset time period, and controls the gate driver to allow a gate voltage below a preset threshold voltage to be applied to the gate terminal or not to allow the gate voltage to be applied to the gate terminal during a time period in which the semiconductor switch is off during the preset time period according to the on-off duty rate of the semiconductor switch.

5. The system of claim 3, wherein the circuit breaker control part determines whether an overcurrent above a reference current is present based on a current flowing into the semiconductor switch from the power device, and controls the gate driver to allow the semiconductor switch to disconnect the power device from the power system based on a result of the determination, controls the gate driver to allow the power device to be temporarily connected to the power system periodically at a preset time period when the power device is disconnected from the power system, and redetermines whether the overcurrent is present based on a current flowing in from the temporarily connected power device, and controls the gate driver to disconnect the power device from the power system again or maintain a state in which the power device is connected to the power system based on a result of the redetermination.

6. The system of claim 5, wherein the circuit breaker control part temporarily connects the power device to the power system by applying a limited level of gate voltage to the gate terminal of the semiconductor switch, restores, when the overcurrent is not present as a result of the redetermination, the limited level of gate voltage, and maintains a state in which the power device is connected to the power system in a state in which the gate voltage is restored, and
wherein the limited level of gate voltage is a voltage above a threshold voltage at which a source terminal and a drain terminal can be electrically connected in the semiconductor switch, and is a voltage at a level lower than the level of the restored gate voltage.

7. The system of claim 6, wherein the management server determines the limited level of gate voltage according to the characteristics of the power device connected to the management server, provides the determined limited level of gate voltage to the circuit breaker, and provides another reference current value according to the limited level of gate voltage to the circuit breaker control part to determine an overcurrent while the power device is temporarily connected to the power system.

8. The system of claim 5, wherein the management server receives, when the power device is maintained in a state of being connected to the power system as a result of the redetermination, current samples that have sampled the current flowing in from the power device for a predetermined time period from the circuit breaker, compares the received current samples with current characteristics included in at least one abnormal current characteristic profile detected according to the characteristics of the power device, and controls the circuit breaker to disconnect the power device from the power system again or maintain a state in which the power device is connected to the power system, and
wherein the abnormal current characteristic profile is current characteristic information comprising at least one of a change pattern, an average value, a maximum or minimum value, a difference between the maximum and minimum values, a variance, a standard deviation, and a change amount per unit time of current values or voltage values of current samples related to a specific abnormal current phenomenon.

9. The system of claim 3, wherein one of the plurality of electric paths is a neutral line connecting between the power device and the power system,
wherein the neutral line is connected to the ground, and
wherein a source terminal of the semiconductor switch is connected to the neutral line and a drain terminal of the semiconductor switch is connected to the ground.

10. The system of claim 1, wherein at least one smoothing part is included between the power device and the power system to smooth a current supplied from the power device to the power system according to the on-off duty rate of the semiconductor switch.

11. A control method of a power management system, the method comprising:
receiving feedback information comprising information on acceptable power from a power system that receives power from a power device;
determining a duty rate for limiting an amount of power per unit time supplied from the power device to the power system according to the received feedback information; and
controlling a circuit breaker to turn on and off a semiconductor switch of the circuit breaker that is connected between the power device and the power system and interrupts a connection between the power device and the power system through the semiconductor switch when a preset interruption condition is satisfied, according to the duty rate.

12. The method of claim 11, further comprising:
at least one smoothing part between the power device and the power system to smooth a current supplied to the power system,
wherein the method further comprises:
controlling a capacitance of the power storage part according to the duty rate.

13. The method of claim 11, wherein the controlling of the circuit breaker comprises controlling a gate driver of the circuit breaker to allow a gate voltage above a preset threshold voltage to be applied to a gate terminal of the semiconductor switch during a time period in which the semiconductor switch is on during the preset time period according to the duty rate periodically at a preset time period, and controlling the gate driver to allow a gate voltage below a preset threshold voltage to be applied to the gate terminal or not to allow the gate voltage to be applied to the gate terminal during a time period in which the semiconductor switch is off during the preset time period according to the duty rate.

14. The method of claim 11, wherein the controlling of the circuit breaker further comprises:
determining whether an overcurrent above a reference current is present based on a current flowing into the semiconductor switch from the power device;
controlling the circuit breaker to allow the semiconductor switch to disconnect the power device from the power system according to a result of the determination;
controlling the circuit breaker to allow the power device to be temporarily connected to the power system periodically at a preset time period when the power device is disconnected from the power system;
redetermining whether the overcurrent is present based on a current flowing in from the temporarily connected power device; and,
disconnecting the power device from the power system again or maintaining a state in which the power device is connected to the power system based on a result of the redetermination.

15. The method of claim 14, wherein the controlling of the circuit breaker to allow the power device to be temporarily connected to the power system comprises:
temporarily connecting the power device to the power system by applying a limited level of gate voltage to the gate terminal of the semiconductor switch, and
wherein the disconnecting of the power device from the power system again or maintaining of a state in which the power device is connected to the power system based on a result of the redetermination further comprises:
restoring, when the overcurrent does is not present as a result of the redetermination, the limited level of gate voltage.

16. The method of claim 15, wherein the limited level of gate voltage is a voltage above a threshold voltage at which a source terminal and a drain terminal can be electrically connected in the semiconductor switch, and is a voltage at a level lower than that of the restored gate voltage.

17. The method of claim 15, wherein the disconnecting of the power device from the power system again or maintaining of a state in which the power device is connected to the power system based on a result of the redetermination further comprises:
receiving, when the overcurrent is not present as a result of the redetermination, current samples that have sampled the current flowing in from the power device for a predetermined time period from the circuit breaker;
comparing the received current samples with current characteristics included in at least one abnormal current characteristic profile detected according to the characteristics of the power device; and
controlling the circuit breaker to disconnect the power device from the power system again or maintain a state in which the power device is connected to the power system according to a result of the comparison, and
wherein the abnormal current characteristic profile is current characteristic information comprising at least one of a change pattern, an average value, a maximum or minimum value, a difference between the maximum and minimum values, a variance, a standard deviation, and a change amount per unit time of current values or voltage values of current samples related to a specific abnormal current phenomenon.
